# EUROPÄISCHE PATENTSCHRIFT

(11) **EP 3 949 052 B1**
(45) Veröffentlichungstag und Bekanntmachung des Hinweises auf die Patenterteilung: **18.09.2024**
(21) Anmeldenummer: 20715847.8
(22) Anmeldetag: 30.03.2020
(51) Int. Cl.: H02H 3/05, H02H 3/06, H02H 3/087, H02H 3/04

(54) **VERFAHREN ZUM BETREIBEN EINER ELEKTRONISCHEN SCHALTUNGSANORDNUNG ZUR ELEKTRISCHEN STROMBEGRENZUNG IN EINEM EXPLOSIONSGEFÄHRDETEN BEREICH**
METHOD FOR OPERATING AN ELECTRONIC CIRCUIT ARRANGEMENT FOR ELECTRICAL CURRENT LIMITING IN A POTENTIALLY EXPLOSIVE AREA
PROCÉDÉ POUR FAIRE FONCTIONNER UN CIRCUIT ÉLECTRONIQUE POUR LIMITER LE COURANT ÉLECTRIQUE DANS UNE ZONE À RISQUE D'EXPLOSION

(30) Priorität: 29.03.2019 DE 102019108302
(43) Veröffentlichungstag der Anmeldung: 09.02.2022
(73) Patentinhaber: ecom instruments GmbH, 97959 Assamstadt (DE)
(72) Erfinder: SAZINGER, Manfred, 97999 Igersheim (DE)
(74) Vertreter: BRP Renaud & Partner mbB Rechtsanwälte Patentanwälte Steuerberater
(86) Internationale Anmeldenummer: PCT/EP2020/058922
(87) Internationale Veröffentlichungsnummer: WO 2020/201198

(56) Entgegenhaltungen:
- US-A- 4 835 649
- US-A1- 2017 025 844

## Beschreibung

Die vorliegende Erfindung betrifft ein Verfahren zum Betreiben einer elektronischen Schaltungsanordnung zur elektrischen Strombegrenzung in einem explosionsgefährdeten Bereich. Die Erfindung betrifft ferner eine solche elektronische Schaltungsanordnung.

Zur Verwendung von tragbaren elektronischen Geräte in einem explosionsgefährdeten Bereich wie beispielsweise einer Bohrinsel existieren elektronische Schaltungen mit sogenannten elektronischen Schutzschaltungen, welche bei einer Funktionsstörung, beispielsweise in der Art eines elektrischen Kurzschlusses, die elektrische Verbindung zwischen einer wiederaufladbaren Batterie, welche das elektronische Gerät mit elektrischer Energie versorgt, und dem elektronischen Gerät als elektrischem Verbraucher unterbrechen. Hierzu kann in der Schaltungsanordnung ein Schaltungselement, beispielsweise in der Art eines Halbleiterschalters vorgesehen sein, welches in einen Sperrzustand geschaltet werden kann, in welchem es die elektrische Verbindung zwischen Batterie und elektronischem Gerät unterbricht.

Vor diesem Hintergrund beschreibt die US 2017/025844A1 eine Vorrichtung zur elektrischen Strombegrenzung, die zwei seriell zwischen einem Eingang und einem Ausgang angeschlossene Halbleiterschalter sowie eine Komparator-Schaltung umfasst. Mittels der Komparator-Schaltung wird die an den Halbleiterschaltern in Summe abfallende elektrische Spannung überwacht und mit einem vorgegebenen Schwellwert verglichen. Falls die gemessene elektrische Spannung diesen Schwellwert überschreitet, wird ein Überstromzustand festgestellt und in der Folge wenigstens einer der Halbleiterschalter in einen Sperrzustand überführt. Um diesen gesperrten Halbleiterschalter wieder in einen leitenden Zustand umzuschalten, wird von der Komparator-Schaltung die an den Halbleiterschaltern in Summe abfallende Spannung überwacht. Sobald die gemessene elektrische Spannung wieder ein bestimmtes Niveau erreicht hat, wird der im Sperrzustand befindliche Halbleiterschalter mithilfe von gespeicherter elektrische Energie von der Komparator-Schaltung wieder in einen elektrisch leitenden Zustand umgeschaltet.

Die US 4,835,649 A behandelt eine elektrische Strombegrenzungsschaltung mit einem seriell angeschlossenen Halbleiterschalter und einem Komparator, der elektrische Transistoren und elektrische Spannungsteiler umfasst. Der bei Überschreitung eines elektrischen Schwellstroms in den Sperrzustand geschaltete Halbleiterschalter kann mithilfe eines externen Reset-Signals wieder in einen elektrisch leitenden Zustand umgeschaltet werden.

Die vorliegende Erfindung beschäftigt sich mit dem Problem, bei der Entwicklung von elektronischen Schutzschaltungen, insbesondere zur Verwendung in einem explosionsgefährdeten Bereich, neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Eine erste Grundidee der Erfindung besteht darin, eine elektronische Schaltungsanordnung zur elektrischen Strombegrenzung bzw. ein Betriebsverfahren für diese Schaltungsanordnung so zu gestalten, dass die elektrische Strombegrenzung für den durch eine elektrische Versorgungsleitung fließenden elektrischen Strom bei Überschreitung eines Schwellwerts durch Unterbrechen der elektrischen Versorgungsleitung nicht nur aktiviert, sondern im Sinne einer Selbsthaltefunktion auch beibehalten wird, wenn besagter Schwellwert aufgrund der erfolgten Unterbrechung wieder unterschritten wird. Auf diese Weise wird ein Überschreiten eines bestimmten Strom-Schwellwerts wirksam und dauerhaft unterbunden. Die Unterbrechung der elektrischen Versorgungsleitung hat beim hier vorgeschlagenen, erfindungsgemäßen Verfahren zur Folge, dass ein an die elektrische Versorgungsleitung angeschlossener elektrischer Verbraucher solange nicht mehr mit elektrischer Energie aus einer ebenfalls an die Versorgungsleitung angeschlossenen elektrischen Spannungsversorgung solange unterbrochen bleibt, bis an den elektrischen Verbraucher eine elektrische Spannung angelegt wird, die ein "Rücksetzen" der/des geöffneten Halbleiterschalters bewirkt. Die Unterbrechung der elektrischen Versorgungsleitung erfolgt dabei mittels zumindest zweier in der Versorgungsleitung angeordneter Halbleiterschalter. Die Verwendung zweier Halbleiterschalter schafft die erforderliche Redundanz, um die Schaltungsanordnung auch in explosionsgefährdeten Bereichen verwenden zu können.

Eine zweite Grundidee betrifft den Schutz der sicherheitsrelevanten Komponenten in explosionsgefährdeten Zonen. So fordert die für explosionsgefährdete Bereiche relevante sog. "Ex-Norm" unter, dass elektronische Bauteile wie Halbleiterschalter, von welchen die Eigensicherheit abhängt, im sicheren Betrieb nur bis zu zwei Drittel ihrer maximal zulässigen Sperrschichttemperatur belastet werden dürfen. Im vorliegenden Fall betrifft dies zumindest zwei Halbleiterschalter, vorzugsweise drei Halbleiterschalter. Hierbei wird der Umstand genutzt, dass ein durchgesteuerter Halbleiterschalter nur einen sehr geringen elektrischen Spannungsabfall aufweist und damit auch bei einem hohen elektrischen Strom nur wenig Erwärmungsleistung erfährt. Eine mögliche Erwärmungsleistung wird beim erfindungsgemäßen Verfahren an diesem Spannungsabfall als Summe aus zwei oder sogar drei Halbleiterschaltern erkannt. In Reaktion darauf wird der elektrische Stromfluss unterbrochen und somit eine mögliche Erwärmung der Hableiterschalter bereits vor ihrer Entstehung unterbunden. Die Verwendung von Temperatursensoren, um mögliche Überhitzung der Halbleiterschalter zu erkennen und nach der Erkennung Gegenmaßnahmen einzuleiten, ist daher nicht erforderlich.

Das hier vorgestellte, erfindungsgemäße Verfahren dient zum Betreiben einer elektronischen Schaltungsanordnung zur elektrischen Strombegrenzung in einem explosionsgefährdeten Bereich. Die Schaltungsanordnung umfasst zumindest einen elektrischen Verbraucher, der mittels einer elektrischen Versorgungsleitung mit elektrischer Energie aus einer elektrischen Spannungsversorgung, insbesondere aus einer wiederaufladbaren elektrischen Batterie, versorgt wird. Bei diesem Verbraucher kann es sich um ein elektronisches Gerät handeln. Gemäß dem Verfahren wird, insbesondere mittels wenigstens einer in der Schaltungsanordnung vorhandenen Komparator-Schaltung, zumindest einer von zumindest zwei in der Versorgungsleitung vorhandenen Halbleiterschaltern in einen geöffneten Zustand umgeschaltet, wenn die an den Halbleiterschaltern in Summe abfallende elektrische Spannung einen vorgegebenen Spannungs-Schwellwert überschreitet. Auf diese Weise wird die elektrische Versorgungsleitung elektrisch unterbrochen.

Erfindungsgemäß wird der zumindest eine geöffnete Halbleiterschalter vom geöffneten in den geschlossenen Zustand umgeschaltet, sobald an den elektrischen Verbraucher eine externe elektrische Spannung angelegt.

Erfindungsgemäß ist die an den wenigstens einen elektrischen Verbraucher angelegte elektrische Spannung größer als die von der elektrischen Spannungsquelle bereitgestellte elektrische Versorgungsspannung.

Bevorzugt wird diese Spannung elektrisch parallel zu dem wenigstens einen Verbraucher an diesen angelegt.

Als "geöffneter Zustand" wird vorliegend insbesondere ein Sperrzustand des jeweiligen Halbleiterschalters verstanden, als geschlossener Zustand jeweils ein "Durchlass-Zustand".

Optional kann der geöffneten Zustand des zumindest einen Halbleiterschalters nach einem Unterschreiten des Spannungs-Schwellwerts beibehalten werden, bis die Komparator-Schaltung zurückgesetzt wird.

Gemäß einer bevorzugten Ausführungsform erfolgt das Umschalten des wenigstens einen Halbleiterschalters zwischen dem geöffneten und dem geschlossenen Zustand mittels einer mit dem Halbleiterschalter zusammenwirkenden Komparator-Schaltung. Dabei wird eine Selbsthalte-Funktion realisiert, so dass der Halbleiterschalter nach dem Umschalten in den geöffneten Zustand aufgrund der damit einhergehenden elektrischen Unterbrechung in der Versorgungsleitung nicht sofort wieder in den geschlossenen Zustand zurückgeschaltet wird.

Zweckmäßig wird von der wenigstens einen Komparator-Schaltung erkannt, ob an den elektrischen Verbraucher die externe elektrische Spannung angelegt ist, und, falls dies zutrifft, von der Komparator-Schaltung ein elektrisches Ausgangssignal erzeugt, welches ein Umschalten des Halbleiterschalters vom geöffneten Zustand in den geschlossenen Zustand bewirkt.

Gemäß einer vorteilhaften Weiterbildung wird eine erste elektrische Eingangsspannung, welche von der Summe aus der am wenigstens einen elektrischen Verbraucher abfallenden elektrischen Spannung und der an den Halbleiterschaltern in Summe abfallenden elektrischen Spannung abhängt, an einem ersten Komparator-Eingangsanschluss der Komparator-Schaltung bereitgestellt. Ebenso wird bei dieser Weiterbildung wird eine zweite elektrische Eingangsspannung, welche von der am wenigstens einen elektrischen Verbraucher abfallenden elektrischen Spannung abhängt, an einem zweiten Komparator-Eingangs-anschluss der Komparator-Schaltung bereitgestellt. Ferner wird bei dieser Weiterbildung in Abhängigkeit von den an den beiden Komparator-Eingangsanschlüssen bereitgestellten elektrischen Spannungen an einem Ausgangsanschluss der Komparator-Schaltung ein elektrisches Ausgangssignal zum Steuern und - gegebenenfalls - zum Umschalten des Halbleiterschalters erzeugt.

Gemäß einer anderen bevorzugten Ausführungsform wird die oben erwähnte elektrische Spannung durch Anschließen eines elektrischen Ladegeräts an den wenigstens einen elektrischen Verbraucher angelegt bzw. bereitgestellt. Mittels des elektrischen Ladegeräts kann die elektrische Spannungsversorgung bzw. die wiederaufladbare Batterie elektrisch aufgeladen werden. Zweckmäßig kann - durch entsprechende Ausgestaltung der elektronischen Schaltungsanordnung - also auch das Zurücksetzen der Komparator-Schaltung durch ein Anschließen eines elektrischen Ladegeräts zum Aufladen der wiederaufladbaren elektrischen Batterie ausgelöst werden.

Gemäß einer bevorzugten Ausführungsform wird der zumindest eine im geöffneten Zustand befindliche Halbleiterschalter durch das Zurücksetzen der Komparator-Schaltung in einen geschlossenen Zustand umgeschaltet, in welchem die Unterbrechung der elektrischen Versorgungsleitung durch diesen Halbleiterschalter aufgehoben ist. Besonders bevorzugt werden alle vorgesehenen Komparator-Schaltungen auf diese Weise zurückgesetzt, so dass der elektrische Verbraucher über die elektrische Versorgungsleitung wieder mit elektrischer Energie versorgt werden kann.

Gemäß einer besonders bevorzugten Ausführungsform des Verfahrens wird vorgeschlagen, dass das Umschalten des zumindest einen Halbleiterschalters zwischen dem geöffneten und dem geschlossenen Zustand mittels einer Logikeinheit realisiert wird. Diese Logik-Einheit erzeugt durch eine "Oder-Verknüpfung" oder durch eine "Und-Verknüpfung" eine zweier Signaleingänge ein Ausgangssignal, mittels welchem der Halbleiterschalters angesteuert wird, wobei ein am ersten Signaleingang erzeugtes erstes Eingangssignal von der Komparator-Schaltung erzeugt wird. Besagte Logik-Einheit ermöglicht, dass der zugeordnete Halbleiterschalter nicht nur durch den betreffenden Halbleiterschalter angesteuert werden kann, sondern unabhängig davon durch eine zusätzliche elektrische Spannungsüberwachung, die im Folgenden genauer erläutert wird. Die in der Logik-Einheit realisierte "Oder"-Verknüpfung bzw. "Und-Verknüpfung" sorgt also dafür, dass der Halbleiterschalter sowohl mittels der bereits vorgestellten Komparator-Schaltung als auch mittels der im Folgenden erläuterten elektrischen Spannungsüberwachung umgeschaltet werden kann. In der Logik-Einheit wird die "Oder-Verknüpfung" zum Umschalten des Halbleiter-Schalters vom geschlossenen in den geöffneten Zustand verwendet. Die "Und-Verknüpfung" wird verwendet, um den Halbleiterschalter im geöffneten Zustand zu halten.

Gemäß einer vorteilhaften Weiterbildung wird der durch die elektrische Versorgungsleitung fließende elektrische Strom mittels einer zusätzlichen elektrischen Spannungsüberwachung überwacht. Diese zusätzliche elektrische Spannungsüberwachung schaltet zumindest einen der zumindest zwei in der Versorgungsleitung vorhandenen Halbleiterschalter in seinen geöffneten Zustand um, wenn der durch die elektrische Versorgungsleitung fließende elektrische Strom einen vorbestimmten Schwellwert überschreitet. Auf diese Weise kann der elektrische Stromfluss durch die elektrische Versorgungsleitung zusätzlich und unabhängig zur Überwachung mittels der Komparator-Schaltungen sichergestellt werden. Die elektrische Spannungsüberwachung kann durch einen integrierten Schaltkreis (IC) gebildet sein, welcher zur Bestimmung des durch die Versorgungsleitung fließenden elektrischen Stroms die an einem in der Versorgungsleitung angeordneten ohmschen Widerstand abfallende elektrische Spannung misst.

Zweckmäßig erzeugt die elektrische Spannungsüberwachung zum Umschalten des Halbleiterschalters in den geöffneten Zustand bei Überschreiten des Strom-Schwellwerts am zweiten Signaleingang der Logikeinheit ein entsprechendes Steuersignal. Dieses Steuersignal ist derart ausgestaltet, dass es mittels der in der Logik-Einheit realisierten "Oder-Verknüpfung" an den Steuereingang des Halbleiterschalters weitergegeben wird. Auf diese Weise ist die erforderliche Ansteuerung des betreffenden Halbleiterschalters durch die elektrische Strombegrenzung möglich, und zwar unabhängig von der den zweiten Signaleingang steuernden Komparator-Schaltung. Besonders bevorzugt kann die elektrische Strombegrenzung die wenigstens zwei, vorzugsweise alle, in der elektrischen Versorgungsleitung vorhandenen Halbleiterschalter ansteuern. Hierzu ist die elektrische Spannungsüberwachung elektrische mit den diesen Halbleiterschaltern zugeordneten Logik-Einheiten, also deren jeweiligem zweiten Signaleingang, verbunden.

Zweckmäßig wird der in den geöffneten Zustand umgeschaltete Halbleiterschalter durch entsprechende Ansteuerung wenigstens einer Komparator-Schaltung im geöffneten Zustand gehalten, nachdem der durch die elektrische Versorgungsleitung fließende elektrische Strom den Strom-Schwellwert wieder unterschritten hat. Auf diese Weise kann ein erneutes Öffnen des Halbleiterschalters aufgrund des immer noch vorliegenden Fehlerzustands vermieden werden. Insbesondere wird ein ständiges Hin- und Herschalten des Halbleiterschalters zwischen dem geöffneten und dem geschlossenen Zustand vermieden.

Die Erfindung betrifft ferner eine elektronische Schaltungsanordnung zur elektrischen Strombegrenzung in einem explosionsgefährdeten Bereich. Die Schaltungsanordnung ist insbesondere zur Durchführung des vorangehend erläuterten Verfahrens ausgebildet, so dass sich die vorangehend erläuterten Vorteile des Verfahrens auch auf die Schaltungsanordnung übertragen.

Die erfindungsgemäße Schaltungsanordnung umfasst wenigstens einen elektrischen Verbraucher, welcher mittels einer elektrischen Versorgungsleitung mit elektrischer Energie aus einer elektrischen Spannungsquelle, vorzugsweise einer wiederaufladbaren Batterie, versorgt werden kann. Ferner umfasst die Schaltungsanordnung einen ersten Halbleiterschalter und zumindest einen zweiten Halbleiterschalter, welche derart in der elektrischen Versorgungsleitung angeordnet sind, dass durch Umschalten wenigstens eines Halbleiterschalters in einen geöffneten Zustand die elektrische Versorgungsleitung elektrisch unterbrochen wird. In einem solchen unterbrochenen Zustand kann über die elektrische Versorgungsleitung keine elektrische Energie von der elektrischen Spannungsquelle zum wenigstens einem elektrischen Verbraucher transportiert werden. Des Weiteren umfasst die Schaltungsanordnung einen elektrischen Versorgungsanschluss, an welchen die elektrische Spannungsquelle, vorzugsweise die wiederaufladbare Batterie, insbesondere zur Durchführung des oben erläuterten Verfahrens, angeschlossen werden kann oder angeschlossen ist. Dabei sind die wenigstens zwei Halbleiterschalter zwischen dem elektrischen Versorgungsanschluss und dem elektrischen Verbraucher angeordnet. Erfindungsgemäß umfasst die Schaltungsanordnung eine Komparator-Schaltung, vorzugsweise zumindest zwei solche Komparator-Schaltungen, die zweckmäßig identisch aufgebaut sind. Die zumindest eine Komparator-Schaltung ist derart ausgebildet, dass sie zumindest einen Halbleiterschalter in einen geöffneten Zustand umschaltet, so dass die elektrische Versorgungsleitung unterbrochen ist, wenn die an den Halbleiterschaltern in Summe abfallende elektrische Spannung einen vorgegebenen Spannungs-Schwellwert überschreitet. Des Weiteren ist die zumindest eine Komparator-Schaltung derart ausgebildet, dass sie den zumindest einen Halbleiterschalter (wieder) vom geöffneten in den geschlossenen Zustand umschaltet, wenn an den elektrischen Verbraucher eine externe elektrische Spannung angelegt wird, die größer ist als die von der elektrischen Spannungsquelle bereitgestellte elektrische Versorgungsspannung.

Gemäß einer vorteilhaften Weiterbildung sind für jeden Halbleiterschalter eine separate Komparator-Schaltung sowie eine dieser Komparator-Schaltung und diesem Halbleiterschalter zugeordnete Logik-Einheit vorhanden. Eine solche Redundanz erhöht die Betriebssicherheit der Schaltungsanordnung, was aufgrund gesetzlicher Bestimmungen erforderlich sein kann, wenn die Schaltungsanordnung zur Strombegrenzung in einem explosionsgefährdeten Bereich eingesetzt werden soll.

Gemäß einer bevorzugten Ausführungsform erfolgt das Umschalten des zumindest einen Halbleiterschalters zwischen dem geöffneten und dem geschlossenen Zustand mittels einer Logikeinheit, die durch eine "Oder-Verknüpfung" " oder durch eine "Und-Verknüpfung" mindestens zweier Signaleingänge ein Ausgangssignal erzeugt. Mittels dieses Ausgangssignals wird der betreffende Halbleiterschalter angesteuert. Bei dieser Ausführungsform ist der erste Signaleingang der Logikeinheit zum Erzeugen des ersten elektrischen Eingangssignals elektrisch mit einem Komparator-Ausgang der Komparator-Schaltung verbunden. Besagte Logik-Einheit ermöglicht, dass der zugeordnete Halbleiterschalter nicht nur durch den betreffenden Halbleiterschalter angesteuert werden kann, sondern unabhängig davon durch die bereits erläuterte zusätzliche elektrische Strombegrenzung. Die in der Logik-Einheit realisierte "Oder"-Verknüpfung sorgt dafür, dass der Halbleiterschalter sowohl mittels der bereits vorgestellten Komparator-Schaltung als auch mittels der zusätzlichen elektrischen Spannungsüberwachung umgeschaltet werden kann. Außerdem sorgt die in der Logik-Einheit realisierte "Oder"-Verknüpfung dafür, dass der Halbleiterschalter nach dem Umschalten in den geöffneten Zustand in diesem verbleibt, auch wenn der elektrische Strom durch die elektrische Versorgungsleitung aufgrund des geöffneten Halbleiterschalters wieder den kritischen Schwellwert unterschritten hat.

Gemäß einer vorteilhaften Weiterbildung der Schaltungsanordnung ist in der elektrischen Versorgungsleitung die bereits im Zusammenhang mit dem erfindungsgemäßen Verfahren erläuterte zusätzliche elektrische Spannungsüberwachung angeordnet. Diese elektrische Spannungsüberwachung ist derart ausgebildet, dass sie zumindest einen der zumindest zwei Halbleiterschalter in den geöffneten Zustand umschaltet, wenn der durch die elektrische Versorgungsleitung fließende elektrische Strom einen vorbestimmten Strom-Schwellwert überschreitet. Auf diese Weise kann der elektrische Strom unabhängig von der ordnungsgemäßen Funktionsweise der Komparator-Schaltungen sichergestellt werden. Die elektrische Spannungsüberwachung kann durch einen integrierten Schaltkreis (IC) gebildet sein, welcher zur Bestimmung des durch die Versorgungsleitung fließenden elektrischen Stroms die an einem in der Versorgungsleitung angeordneten ohmschen Widerstand abfallende elektrische Spannung misst.

Zweckmäßig ist die elektrische Spannungsüberwachung zum Umschalten des Halbleiterschalters in den geöffneten Zustand bei Überschreiten des Strom-Schwellwerts am zweiten Signaleingang der Logikeinheit und zum Erzeugen des zweiten Eingangssignals elektrisch mit dem zweiten Signaleingang der Logikeinheit verbunden.

Gemäß einer anderen bevorzugten Ausführungsform weist die Komparator-Schaltung einen Komparator-Ausgangsanschluss sowie einen ersten und einen zweiten Komparator-Eingangsanschluss auf. Außerdem wird gemäß dieser Ausführungsform im Betrieb der Komparator-Schaltung in Abhängigkeit eines Vergleichs zwischen dem am ersten und zweiten Komparator-Eingangsanschluss anliegenden ersten bzw. zweiten Komparator-Eingangssignal am Komparator-Ausgangsanschluss ein geeignetes Komparator-Ausgangssignal erzeugt.

Bevorzugt umfasst die wenigstens eine Komparator-Schaltung einen Operationsverstärker oder ist durch einen Operationsverstärker gebildet, welcher die beiden Komparator-Eingangsanschlüsse und den Komparator-Ausgangsanschluss umfasst. Somit können für die technische Realisierung der Komparator-Schaltungen kommerziell verfügbare Elektronik-Komponenten verwendet werden.

Gemäß einer vorteilhaften Weiterbildung ist der erste Komparator-Eingangsanschluss, vorzugsweise über einen ersten elektrischen Spannungsteiler, elektrisch mit einem ersten Abzweigpunkt verbunden. Dieser erste Abzweigpunkt ist in der elektrischen Versorgungsleitung zwischen dem elektrischen Versorgungsanschluss und den zumindest zwei Halbleiterschaltern angeordnet. In analoger Weise ist bei dieser Weiterbildung der zweite Komparator-Eingangsanschluss, vorzugsweise über einen zweiten elektrischen Spannungsteiler, elektrisch mit einem zweiten Abzweigpunkt verbunden. Dieser zweite Abzweigpunkt ist in der elektrischen Versorgungsleitung zwischen den zumindest zwei Halbleiterschaltern und dem wenigstens einen elektrischen Verbraucher angeordnet.

Gemäß einer weiteren vorteilhaften Weiterbildung sind in der elektronischen Schaltungsanordnung für jeden zum Unterbrechen der elektrischen Versorgungsleitung in dieser Versorgungsleitung vorgesehenen Halbleiterschalter jeweils eine Logikeinheit zum Steuern dieses Halbleiterschalters sowie eine Komparator-Schaltung zum Steuern der jeweiligen Logikeinheit vorhanden.

Zweckmäßig kann der Komparator-Ausgangsanschluss wenigstens einer Komparator-Schaltung zum Ansteuern zumindest zwei verschiedener in der elektrischen Versorgungsleitung angeordneten Halbleiterschalter elektrisch mit den Signaleingängen zumindest zweier verschiedener Logikeinheiten, zum Ansteuern der Halbleiterschalter vorhandenen Logikeinheiten, verbunden sein. Bevorzugt kann dies für alle in der Schaltungsanordnung vorhandenen Komparator-Schaltungen gelten.

Gemäß einer vorteilhaften Weiterbildung umfasst der erste oder/und der zweite elektrische Spannungsteiler wenigstens einen ohmschen elektrischen Widerstand, der bevorzugt als NTC- oder PTC-Widerstand ausgebildet sein kann.

Weitere wichtige Merkmale und Vorteile der Erfindung ergeben sich aus den Unteransprüchen, aus der Zeichnung und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch:
- Fig. 1: ein Beispiel einer erfindungsgemäßen Schaltungsanordnung zur Durchführung des erfindungsgemäßen Verfahrens,
- Fig. 2: eine Weiterbildung des Beispiels der Figur 1.

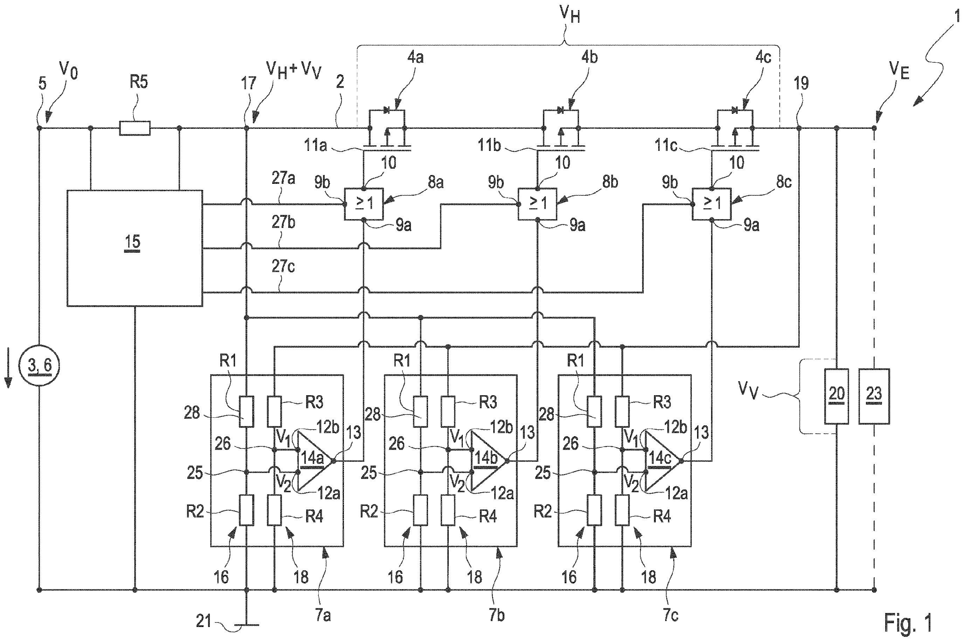

Die einzige Figur 1 illustriert ein Beispiel einer erfindungsgemäßen elektronischen Schaltungsanordnung 1, die zur Verwendung in einem explosionsgefährdeten Bereich und zur Durchführung des erfindungsgemäßen Verfahrens ausgebildet ist. Die elektronische Schaltungsanordnung 1 umfasst einen in Figur 1 nur grobschematisch angedeuteten elektrischen Verbraucher 20, welcher mittels einer elektrischen Versorgungsleitung 2 mit elektrischer Energie aus einer elektrischen Spannungsquelle 3 in Form einer wiederaufladbaren Batterie 6 versorgt werden kann. Hierzu ist die elektrische Spannungsquelle 3 bzw. die wiederaufladbare Batterie 6 ebenfalls elektrisch mit der elektrischen Versorgungsleitung 2 verbunden. Im Betrieb stellt die elektrische Spannungsquelle 3 bzw. die Batterie 6 eine elektrische Versorgungsspannung V₀ bereit.

Im Beispiel der Figur 1 umfasst die elektronische Schaltungsanordnung 1 einen ersten Halbleiterschalter 4a, einen zweiten Halbleiterschalter 4b und einen dritten Halbleiterschalter 4c. Die drei Halbleiterschalter 4a, 4b, 4c sind derart in der elektrischen Versorgungsleitung 2 angeordnet, dass durch Umschalten wenigstens eines der drei Halbleiterschalter 4a, 4b, 4c in einen jeweiligen geöffneten Zustand die elektrische Versorgungsleitung 2 elektrisch unterbrochen wird. Bevorzugt sind die drei Halbleiterschalter 4a, 4b, 4c elektrisch in Reihe zueinander geschaltet. In besagtem Zustand kann über die elektrische Versorgungsleitung 2 keine elektrische Energie von der elektrischen Spannungsquelle 3 zum elektrischen Verbraucher 20 transportiert werden. An der elektrischen Versorgungsleitung 2 ist gemäß Figur 1 ein elektrischer Versorgungsanschluss 5 vorgesehen, an welchen die elektrische Spannungsquelle 3 bzw. die wiederaufladbaren Batterie 6 angeschlossen sein kann. Die drei Halbleiterschalter 4a-4c sind, elektrisch in Reihe zueinander geschaltet, zwischen dem elektrischen Versorgungsanschluss 5 und dem elektrischen Verbraucher 20 angeordnet.

Ferner umfasst die elektronische Schaltungsanordnung 1 drei Komparator-Schaltungen 7a, 7b, 7c, wobei jedem Halbleiterschalter 4a, 4b, 4c jeweils eine Komparator-Schaltung 7a, 7b, 7c zugeordnet ist. Im Folgenden wird die Funktionsweise der drei Komparator-Schaltungen 7a, 7b, 7c anhand der Komparator-Schaltung 7a erläutert, die dem ersten Halbleiterschalter 4a zugeordnet ist. Die Funktionsweise der beiden Komparator -Einheiten 7b, 7c ist identisch zur Komparator-Schaltung 7a.

Die Komparator-Schaltung 7a kann den Halbleiterschalter 4a in einen geöffneten Zustand umschalten, so dass die elektrische Versorgungsleitung 2 elektrisch unterbrochen ist, wenn die an den drei Halbleiterschaltern 4a, 4b, 4c in Summe abfallende elektrische Spannung einen vorgegebenen Spannungs-Schwellwert V_{S} überschreitet. Außerdem kann die Komparator-Schaltung 7a den Halbleiterschalter 4a wieder vom geöffneten in den geschlossenen Zustand umschalten, wenn an den elektrischen Verbraucher 20 eine externe elektrische Spannung V_{E} angelegt wird, welche im Beispielszenario größer ist als die von der elektrischen Spannungsquelle 3 bereitgestellte elektrische Versorgungsspannung V₀. Besagte externe elektrische Spannung V_{E} kann insbesondere durch Anschließen eines elektrischen Ladegeräts 23 an den elektrischen Verbraucher 20 bereitgestellt werden. Das Ladegerät 23 dient zum elektrischen Aufladen der Batterie 6.

Von der Komparator-Schaltung 7a wird also erkannt, ob die an den drei Halbleiterschaltern 4a, 4b, 4c in Summe abfallende elektrische Spannung V_{H} einen vorgegebenen Spannungs- Schwellwert V_{S} überschreitet. Sobald dieser Fall eintritt, wird von der Komparator-Schaltung 7a ein elektrisches Ausgangssignal - in Form einer elektrischen Ausgangsspannung - erzeugt, welches ein Umschalten des Halbleiterschalters 4a vom geschlossenen Zustand in den geöffneten Zustand bewirkt, so dass die elektrische Versorgungsleitung 2 elektrisch unterbrochen wird. Mithilfe der Komparator-Schaltung 7a ist dabei eine Selbsthalte-Funktion umgesetzt, so dass der Halbleiterschalter 4a nach dem Umschalten in den geöffneten Zustand aufgrund der damit einhergehenden elektrischen Unterbrechung in der elektrischen Versorgungsleitung 2 nicht wieder sofort wieder in den geschlossenen Zustand zurück geschaltet wird. Ein unerwünschtes "Triggern" des Halbleiterschalters 4a, also ein sich vielfach wiederholendes Umschalten des Halbleiterschalters 4a zwischen dem geöffneten und dem geschlossenen Zustand wird auf diese Weise vermieden.

Zum Umschalten des Halbleiterschalters 4a vom geöffneten in den geschlossenen Zustand, also zum "Zurücksetzen" der Schaltungsanordnung 1, kann von der Komparator-Schaltung 7a erkannt werden, ob an den elektrischen Verbraucher 20 die besagte externe elektrische Spannung V_{E} angelegt wurde. Sobald dies erkannt wird, erzeugt die Komparator-Schaltung 7a ein elektrisches Ausgangssignal in Form einer elektrischen Ausgangsspannung, welches ein Umschalten des Halbleiterschalters 4a vom geöffneten Zustand in den geschlossenen Zustand bewirkt.

Die Schaltungsanordnung 1 ist dabei so ausgebildet, dass eine erste elektrische Eingangsspannung V₁, welche von der Summe aus der am elektrischen Verbraucher 20 abfallenden elektrischen Spannung Vv und der an den Halbleiterschaltern 4a, 4b, 4c in Summe abfallenden elektrische Spannung V_{H} abhängt, am ersten Komparator-Eingangsanschluss 12a der Komparator-Schaltung 7a bereitgestellt wird. Eine zweite elektrische Eingangsspannung V₂, welche von der am elektrischen Verbraucher 20 abfallenden elektrischen Spannung abhängt, wird am zweiten Komparator-Eingangsanschluss 12b der Komparator-Schaltung 7a bereitgestellt. In Abhängigkeit von den an den beiden Komparator-Eingangsanschlüssen 12a, 12b bereitgestellten elektrischen Spannungen V₁, V₂ wird ein am Komparator-Ausgangsanschluss 13 der Komparator-Schaltung 7a ein bestimmtes Ausgangssignal - in Form einer elektrischen Ausgangsspannung - erzeugt, welche gegebenenfalls ein Umschalten des Halbleiterschalters 4a zwischen dem geöffneten und dem geschlossenen Zustand bewirkt.

Wie Figur 1 erkennen lässt, ist für jede Komparator-Schaltung 7a, 7b, 7c und somit für jeden Halbleiterschalter 4a, 4b, 4c eine separate Logik-Einheit 8a, 8b, 8c vorhanden. Im Folgenden werden Aufbau und Funktionsweise der Logik-Einheit 8a genauer erläutert. Die beiden Logik-Einheiten 8b, 8c sind identisch zur Logikeinheit 8a aufgebaut, sodass deren Funktionsweise identisch zu der Funktionsweise der Logik-Einheit 8a ist.

Die Logik-Einheit 8a besitzt einen ersten und einen zweiten Signaleingang 9a, 9b sowie einen Signalausgang 10. Der Signalausgang 10 ist über eine logische "Oder"-Verknüpfung mit den beiden Signaleingängen 9a, 9b verknüpft. Ein Steuereingang 11a des ersten Halbleiterschalters 4a, mittels welchem der erste Halbleiterschalter 4a zwischen dem geöffneten und im geschlossenen Zustand umgeschaltet werden kann, wird über ein am Signalausgang 10 der Logik-Einheit 8a erzeugtes Ausgangssignal angesteuert.

Wie Figur 1 veranschaulicht, ist hierzu der erste Signaleingang der Logik-Einheit 8a elektrisch mit einem Komparator-Ausgangsanschluss 13 der Komparator-Schaltung 7a verbunden. Außerdem ist gemäß Figur 1 in der elektrischen Versorgungsleitung 2 zwischen dem Versorgungsanschluss 5 und den drei Halbleiterschaltern 4a, 4b, 4c eine elektrische Spannungsüberwachung 15 angeordnet. Die elektrische Spannungsüberwachung 15 schaltet die drei Halbleiterschalter 4a, 4b, 4c jeweils in ihren geöffneten Zustand um, wenn der durch die elektrische Versorgungsleitung 2 fließende elektrische Strom I einen vorbestimmten Strom-Schwellwert I_{S} überschreitet. Zum Umschalten der drei Halbleiterschalter 4a, 4b, 4c in den geöffneten Zustand bei Überschreiten des Strom-Schwellwerts Is ist die elektrische Spannungsüberwachung 15 mit den zweiten Signaleingängen 9b der Logik-Einheiten 8a, 8b, 8c verbunden.

Wie Figur 1 des Weiteren erkennen lässt, umfasst die erste Komparator-Schaltung 7a neben dem Komparator-Ausgangsanschluss 13 auch einen ersten und einen zweiten Komparator-Eingangsanschluss 12a, 12b. Somit kann die Komparator-Schaltung 7a in Abhängigkeit eines Vergleichs zwischen einem am ersten und am zweiten Komparator-Eingangsanschluss 12a, 12b anliegenden ersten bzw. zweiten Komparator-Eingangssignal am Komparator-Ausgangsanschluss 13 ein Komparator-Ausgangssignal erzeugen. Die erste Komparator-Schaltung 7a kann durch einen dem Fachmann bekannten Operationsverstärker 14a gebildet sein, welcher die beiden Komparator-Eingangsanschlüsse 12a, 12b und den Komparator-Ausgangsanschluss 13 aufweist.

Wie die Darstellung der Figur 1 veranschaulicht, ist der erste Komparator-Eingangsanschluss 12a über einen ersten elektrischen Spannungsteiler 16 elektrisch mit einem ersten Abzweigpunkt 17 verbunden, der in der elektrischen Versorgungsleitung 2 zwischen dem elektrischen Versorgungsanschluss 5 und den drei Halbleiterschaltern 4a, 4b, 4c angeordnet ist. Der erste Spannungsteiler 16 umfasst einen ersten elektrischen Widerstand R1 und einen elektrisch in Reihe zu diesem geschalteten zweiten elektrischen Widerstand R2. Die elektrische Versorgungsleitung 2 ist über den ersten Spannungsteiler 16 mit den beiden Widerständen R1 und R2 mit einem elektrischen Masse-Potential 21 verbunden. Zwischen den beiden elektrischen Widerständen R1 und R2 ist ein Abzweigpunkt 25 vorgesehen, der elektrisch mit dem ersten Komparator-Eingangsanschluss 12a verbunden ist. Weiterhin ist der zweite Komparator-Eingangsanschluss 12b über einen zweiten elektrischen Spannungsteiler 18 elektrisch mit einem zweiten Abzweigpunkt 19 verbunden, der in der elektrischen Versorgungsleitung 2 zwischen den drei Halbleiterschaltern 4a, 4b, 4c und dem elektrischen Verbraucher 20 angeordnet ist. Der zweite Spannungsteiler 18 umfasst einen dritten elektrischen Widerstand R3 und einen elektrisch in Reihe zu diesem geschalteten vierten elektrischen Widerstand R4. Zweckmäßig handelt es sich bei den elektrischen Widerständen R1, R2, R3, R4 um ohmsche Widerstände. Die elektrische Versorgungsleitung 2 ist auch über den zweiten Spannungsteiler 18 mit den beiden Widerständen R3 und R4 elektrisch mit dem Masse-Potential 21 verbunden. Zwischen den beiden elektrischen Widerständen R3 und R4 ist ein Abzweigpunkt 26 vorgesehen, der elektrisch mit dem zweiten Komparator-Eingangsanschluss 12b verbunden ist.

Wie Figur 1 außerdem erkennen lässt, kann der Komparator-Ausgangsanschluss 13 der drei Komparator-Schaltungen 7a, 7b, 7c zum Ansteuern zumindest zweier verschiedener, in der elektrischen Versorgungsleitung 2 angeordneter Halbleiterschalter 4a, 4b, 4c elektrisch mit den Signaleingängen 9a, 9b aller dreier Logik-Einheiten 8a, 8b, 8c verbunden sein, so dass jede der drei Logik-Einheiten 8a-8c und somit jede der drei Komparator-Schaltungen 7a-7c alle drei Halbleiterschalter 4a-4c in ihren jeweiligen geöffneten Zustand umschalten kann.

Wie Figur 1 ferner erkennen lässt, kann der erste elektrische Widerstand R1 des ersten elektrischen Spannungsteilers 16 als NTC-Widerstand oder als PTC-Widerstand (nicht gezeigt) ausgeführt sein.

Im Folgenden wird anhand des Schaltbilds der Figur 1 das erfindungsgemäße Verfahren beispielhaft erläutert: Im Betrieb des elektrischen Verbrauchers 20 bezieht der Verbraucher 20 über die elektrische Versorgungsleitung 2 elektrische Energie aus der elektrischen Spannungsquelle 3 in Form der wiederaufladbaren Batterie 6. Somit fließt von der Spannungsquelle 3 über die elektrische Versorgungsleitung 2 und den Verbraucher 20 ein elektrischer Strom I zum Masse-Potential 21.Dieser elektrische Strom wird von der elektrischen Spannungsüberwachung 15 überwacht. Die beiden elektrischen Spannungsteiler 16, 18 mit den Widerständen R1, R2, R3, R4 sind so dimensioniert, dass die Komparator-Schaltung 7a ein Ausgangssignal erzeugt, welches von der nachgeschalteten Logikeinheit 8a kein Umschalten des Halbleiterschalters 4a in den geöffneten Zustand erfolgt. Somit kann weiterhin elektrischer Strom I durch die Versorgungsleitung 2 fließen.

Jedoch werden mittels der drei Komparator-Schaltungen 7a, 7b, 7c die drei in der elektrischen Versorgungsleitung 2 vorhandenen Halbleiterschalter 4a-4c in einen geöffneten Zustand umgeschaltet, so dass die elektrische Versorgungsleitung 2 unterbrochen ist, wenn die an den Halbleiterschaltern 4a, 4b, 4c in Summe abfallende elektrische Spannung V_{H} den vorgegebenen Spannungs-Schwellwert V_{S} überschreitet. In der Folge besteht keine elektrische Verbindung mehr zwischen der elektrischen Spannungsquelle 3 in Form der wiederaufladbaren Batterie 6 und dem elektrischen Verbraucher 20, d.h. die elektrische Energie- bzw. Spannungsversorgung des elektrischen Verbrauchers 20 ist unterbrochen. In diesem Zustand fällt am elektrischen Verbraucher 20 keine elektrische Spannung ab. Somit ist auch der zweite Spannungsteiler 18 mit dem dritten und dem vierten Widerstand R3, R4 stromlos. Folglich ändert sich das am zweiten Komparator-Eingangs-anschluss 12b anliegende Eingangssignal. Der erste Spannungsteiler 16 mit dem ersten und dem zweiten Widerstand R1, R2 ist derart dimensioniert, dass sich aufgrund des geänderten, am zweiten Komparator-Eingangsanschluss 12b anliegenden Eingangssignals auch das von der ersten Komparator-Schaltung 7a erzeugte Ausgangssignal ändert. Dieses geänderte Ausgangssignal wird über den ersten Signaleingang 9a der Logik-Einheit 8a zugeführt. Aufgrund der dort erfolgenden logischen "Oder"-Verknüpfung wird der Steuereingang 11a des ersten Halbleiterschalters 4a von der ersten Komparator-Schaltung 7a so angesteuert, dass der erste Halbleiterschalter 4a im geöffneten Zustand verbleibt, selbst wenn die elektrische Spannungsüberwachung 15 detektiert hat, dass - aufgrund der nunmehr unterbrochenen elektrischen Versorgungsleitung 2 - der vorgegebene Schwell-Stromwert Is wieder unterschritten wurde. In die Komparator-Schaltung 7a ist also eine Selbsthalte-Funktion integriert, welche den Halbleiterschalter 4a im geöffneten Zustand hält.

Wie die Darstellung der Figur 1 veranschaulicht, ist der erste Komparator-Eingangsanschluss 12a über einen ersten elektrischen Spannungsteiler 16 elektrisch mit einem ersten Abzweigpunkt 17 verbunden, der in der elektrischen Versorgungsleitung 2 zwischen dem elektrischen Versorgungsanschluss 5 und den drei Halbleiterschaltern 4a, 4b, 4c angeordnet ist. Der erste Spannungsteiler 16 umfasst einen ersten elektrischen Widerstand R1 und einen elektrisch in Reihe zu diesem geschalteten zweiten elektrischen Widerstand R2. Die elektrische Versorgungsleitung 2 ist über den ersten Spannungsteiler 16 mit den beiden Widerständen R1 und R2 mit einem elektrischen Masse-Potential 21 verbunden. Zwischen den beiden elektrischen Widerständen R1 und R2 ist ein Abzweigpunkt 25 vorgesehen, der elektrisch mit dem ersten Komparator-Eingangsanschluss 12a verbunden ist. Weiterhin ist der zweite Komparator-Eingangsanschluss 12b über einen zweiten elektrischen Spannungsteiler 18 elektrisch mit einem zweiten Abzweigpunkt 19 verbunden, der in der elektrischen Versorgungsleitung 2 zwischen den drei Halbleiterschaltern 4a, 4b, 4c und dem elektrischen Verbraucher 20 angeordnet ist. Der zweite Spannungsteiler 18 umfasst einen dritten elektrischen Widerstand R3 und einen elektrisch in Reihe zu diesem geschalteten vierten elektrischen Widerstand R4. Die elektrische Versorgungsleitung 2 ist auch über den zweiten Spannungsteiler 18 mit den beiden Widerständen R3 und R4 elektrisch mit dem Masse-Potential 21 verbunden. Zwischen den beiden elektrischen Widerständen R3 und R4 ist ein Abzweigpunkt 26 vorgesehen, der elektrisch mit dem zweiten Komparator-Eingangsanschluss 12b verbunden ist. In einem nominellen Betriebszustand wird der elektrische Verbraucher 20 mit elektrischer Energie aus der elektrischen Spannungsquelle 3 bzw. aus der wiederaufladbaren Batterie 6 versorgt. In diesem nominellen Betriebszustand befinden sich die drei Halbleiterschalter 4a, 4b, 4c jeweils in einem geschlossenen Zustand, sodass elektrischer Strom I von der elektrischen Spannungsquelle 3 bzw. wiederaufladbaren Batterie 6 zum elektrischen Verbraucher 20 fließen kann. Die beiden elektrischen Spannungsteiler 16,18 mit den elektrischen Widerständen R1, R2, R3, R4 sind derart dimensioniert und aufeinander abgestimmt, dass in diesem nominellen Betriebszustand am jeweiligen Komparator-Ausgangsanschluss 13 der drei Komparator-Schaltungen 7a, 7b, 7c ein Ausgangssignal - typischerweise in Form einer elektrischen Ausgangsspannung - erzeugt wird, welches dafür sorgt, dass die nachgeschaltete jeweilige Logik-Einheit 8a, 8b, 8c an ihrem jeweiligen Signalausgang 10 - und somit an dem elektrisch mit dem Signalausgang 10 verbundenen Steuereingang 11a, 11b, 11c des jeweiligen Halbleiterschalters 4a, 4b, 4c - ein Steuersignal erzeugt, welches den betreffenden Halbleiterschalter 4a, 4b, 4c im geschlossenen Zustand belässt.

Über die beiden Abzweigpunkte 17,19, die elektrisch mit dem ersten bzw. zweiten Spannungsteiler 16,18 verbunden sind, kann die insgesamt an den drei Halbleiterschaltern 4a, 4b, 4c abfallende elektrische Spannung V bestimmt werden. Die beiden Spannungsteiler 16,18 sind dabei so dimensioniert, dass im nominellen Betriebszustand von den jeweiligen Komparator-Schaltungen 7a, 7b, 7c das voranstehend genannte Ausgangssignal derart erzeugt wird, dass die Halbleiterschalter 4a, 4b, 4c nicht in den geöffneten Zustand umgeschaltet werden, sodass der elektrische Verbraucher 20 mit elektrischer Energie versorgt werden kann. Überschreitet die an den drei Halbleiterschaltern 4a-4c abfallende elektrische Spannung V, also die elektrische Potenzialdifferenz zwischen den beiden Abzweigpunkten 17, 19 einen vorbestimmten Spannung-Schwellwert V es, so hat dies zur Folge, dass sich die am ersten und zweiten Komparator-Eingangsanschluss 12a, 12b einer jeden Komparator-Schaltung 7a-7c anliegende elektrische Spannung so ändert, dass am Komparator-Ausgang 13 eine Signaländerung in Form einer geänderten Ausgangsspannung Spannungsänderung eintritt. Dies bedeutet, dass vom Komparator-Ausgang 13 ein Spannungssignal erzeugt wird, welches von der jeweils nachgeschalteten Logik-Einheit 8a, 8b, 8c derart verarbeitet wird, dass der der jeweiligen Logik-Einheit 8a, 8b, 8c zugeordnete und nachgeschaltete Halbleiterschalter 4a, 4b, 4c in den geöffneten Zustand umgeschaltet wird. Dies wiederum bewirkt, dass die elektrische Versorgungsleitung 2 elektrisch unterbrochen wird. Somit kann kein elektrischer Strom I mehr von der elektrischen Spannungsquelle 3 bzw. von der wiederaufladbaren Batterie 6 zum elektrischen Verbraucher 20 fließen. Die gewünschte elektrische Strombegrenzung ist auf diese Weise sichergestellt. In diesem Fall soll die elektrische Leistung begrenzt werden, die mindestens einer der Halbleiterschalter 4a, 4b und 4c aufnimmt.

Infolge der elektrischen Unterbrechung der elektrischen Versorgungsleitung 2 kann zwischen dem zweiten Abzweigpunkt 19 und dem Masse-Potenzial 21 keine elektrische Spannung mehr abfallen. Damit geht einher, dass der zweite Spannungsteiler 18, mit den elektrischen Widerständen R3 und R4 stromlos ist. Dies bewirkt ein Umschalten der jeweiligen Komparator-Schaltung 7a, 7b, 7c, d.h. das von der vom Komparator-Schaltung 7a, 7b, 7c nunmehr erzeugte Ausgangssignal, welches der nachgeschalteten Logik-Einheit 8a, 8b, 8c zugeführt wird, ist derart ausgebildet, dass die betreffende Logikeinheit 8a, 8b, 8c zur Erzeugung eines entsprechenden Ausgangssignal am Signalausgang 10 und somit am Steuereingang 11a, 11b, 11c des jeweiligen Halbleiterschalters 4a, 4b, 4c dafür sorgt, dass der betreffende Halbleiterschalter 4a, 4b, 4c jeweils im geöffneten Zustand verbleibt. Auf diese Weise wird ein unerwünschtes Zurückschalten der Halbleiterschalter 4a, 4b, 4c in den geschlossenen Zustand verhindert, nachdem der durch die Versorgungsleitung 2 strömende elektrische Strom aufgrund des Öffnens der Halbleiterschalter 4a, 4b, 4c den zuvor überschrittenen Strom-Schwellwert I_{S} wieder unterschreitet. Mittels der drei Komparator-Schaltungen 7a, 7b, 7c ist also in die Schaltungsanordnung 1 eine Selbsthaltefunktion integriert. Erst ein Anschließen eines elektrischen Ladegeräts 23 zum Aufladen der Batterie 6 - parallel geschaltet zum elektrischen Verbraucher 20, also zwischen dem zweiten Abzweigpunkt 19 und dem Masse-Potential 21 - sorgt dafür, dass der zweite Abzweigpunkt 19 wieder auf ein elektrisches Potential gesetzt wird, welches vom Masse-Potential 21 verschieden ist. In der Folge ist auch der zweite Spannungsteiler 18 mit den elektrischen Widerständen R3, R4 nicht mehr stromlos, sodass die Komparator-Schaltungen 7a, 7b, 7c in ihren jeweiligen Ausgangszustand übergehen. Somit wird der nominelle Betriebszustand der Schaltungsanordnung 1 wiederhergestellt, in welchem sich die Halbleiterschalter 4a, 4b, 4c jeweils in ihrem geschlossenen Zustand befinden, so dass erneut elektrischer Strom I durch die elektrische Versorgungsleitung 2 von der elektrischen Spannungsquelle 3 bzw. der wiederaufladbaren 6 zum elektrischen Verbraucher 20 fließen kann.

Durch besagtes Anschließen eines externen elektrischen Ladegeräts 23 an die elektronische Schaltungsanordnung 1, also an den zweiten Abzweigpunkt 19 und an das Masse-Potential 21 und somit an den elektrischen Verbraucher 20 - werden die drei Komparator-Schaltungen 7a, 7b, 7c der elektronischen Schaltungsanordnung 1 - zurückgesetzt. Solange das elektrische Ladegerät 23 angeschlossen bleibt, wird die wiederaufladbare Batterie 6 geladen. Nach dem Trennen des externen Ladegeräts 23 von der elektronischen Schaltungsanordnung 1 verbleiben die Halbleiterschalter 4a, 4b, 4c jeweils in ihrem geschlossenen Zustand. Somit ist in der Schaltungsanordnung 1 der ursprüngliche nominelle Betriebszustand wiederhergestellt.

Zusätzlich zur elektrischen Stromüberwachung durch die drei Komparator-Schaltungen 7a, 7b, 7c kann der durch den elektrischen Versorgungsleitung 2 fließende Strom I auch mittels einer zusätzlichen elektrischen Spannungsüberwachung 15 überwacht werden, die in Form eines integrierten Schaltkreises (IC) ausgestaltet sein kann.

Die elektrische Spannungsüberwachung 15 überwacht die an einem in der elektrischen Versorgungsleitung 2 angeordneten ohmschen Widerstand R5 abfallende elektrische Spannung V₀. Auf diese Weise kann der durch die elektrische Versorgungsleitung 2 fließende elektrische Strom ermittelt werden. Sobald der durch die Versorgungsleitung 2 strömende elektrische Strom einen vorgegebenen Strom-Schwellwert Is die überschreitet, erzeugt die elektrische Stromversorgung 15 ein Steuersignal - etwa in Form eines elektrischen Spannungspulses - zum Umschalten der Halbleiterschalter 4a, 4b, 4c in den geöffneten Zustand, welches über elektrische Verbindungsleitungen 27a, 27b, 27c zwischen der elektrischen Spannungsüberwachung 15 und den zweiten Signaleingängen 9b der drei Logik-Einheiten 8a, 8b, 8c an diesen zweiten Signaleingängen 9b bereitgestellt wird. In den Logik-Einheiten 8a, 8b, 8c wird die "Oder-Verknüpfung" zum Umschalten des Halbleiter-Schalters vom geschlossenen in den geöffneten Zustand verwendet. Die "Und-Verknüpfung" wird verwendet, um den Halbleiterschalter im geöffneten Zustand zu halten. Aufgrund der in den Logik-Einheit 8a, 8b, 8c stattfindenden "Oder"-Verknüpfungen sowie "Und"-Verknüpfungen der an den jeweiligen ersten und zweiten Signaleingängen 9a, 9b anliegenden Eingangssignale wird das am jeweiligen zweiten Signaleingang 9b der Logik-Einheiten 8a, 8b, 8c anliegende Steuersignal als Ausgangssignal auch am jeweiligen Signalausgang 10 der betreffenden Logik-Einheit 8a, 8b, 8c ausgegeben, welches dann die drei Halbleiterschalter 4a, 4b, 4c in den geöffneten Zustand umschaltet und die bereits erwähnte Selbsthalte-Funktion auslöst.

Die Unterbrechung des elektrischen Stromflusses durch die Versorgungsleitung 2 mittels der elektrischen Spannungsüberwachung 15 sorgt dafür, dass zwischen dem zweiten Abzweigpunkt 19 und dem Masse-Potential 21 keine elektrische Spannung V mehr abfallen kann. Damit geht- wie voranstehend bereits erläutert - einher, dass der zweite Spannungsteiler 18, mit den elektrischen Widerständen R3 und R4 stromlos ist.

Damit einher geht besagtes Umschalten der drei Komparator-Schaltungen 7a, 7b, 7c, d.h. das von der vom Komparator-Schaltung 7a, 7b, 7c nunmehr erzeugte Ausgangssignal, welches der nachgeschalteten Logik-Einheit 8a, 8b, 8c zugeführt wird, hat zur Folge, dass die betreffende Logikeinheit 8a, 8b, 8c zur Erzeugung eines entsprechenden Ausgangssignal am Signalausgang 10 und somit am Steuereingang 11a, 11b, 11c des jeweiligen Halbleiterschalters 4a, 4b, 4c dafür sorgt, dass der betreffende Halbleiterschalter 4a, 4b, 4c jeweils im geöffneten Zustand verbleibt. Die bereits vorgestellte Selbsthaltefunktion der drei Komparator-Schaltungen 7a, 7b, 7c ist also auch wirksam, wenn die Halbleiterschalter 4a, 4b, 4c mittels der elektrischen Spannungsüberwachung 15 in den geöffneten Zustand umgeschaltet werden. Auch in diesem Fall wird also das unerwünschte Zurückschalten der Halbleiterschalter 4a, 4b, 4c in den geschlossenen Zustand verhindert, nachdem der durch die Versorgungsleitung 2 strömende und somit von der elektrischen Strombegrenzung detektierte elektrische Strom I aufgrund des Öffnens der Halbleiterschalter 4a, 4b, 4c den zuvor überschrittenen Strom-Schwellwert IS wieder unterschreitet und somit die elektrische Spannungsüberwachung 15 deaktiviert. Das Zurücksetzen der Komparator-Schaltungen 7a, 7b, 7c erfolgt wie bereits erläutert durch Anschließen des elektrischen Ladegeräts 23.

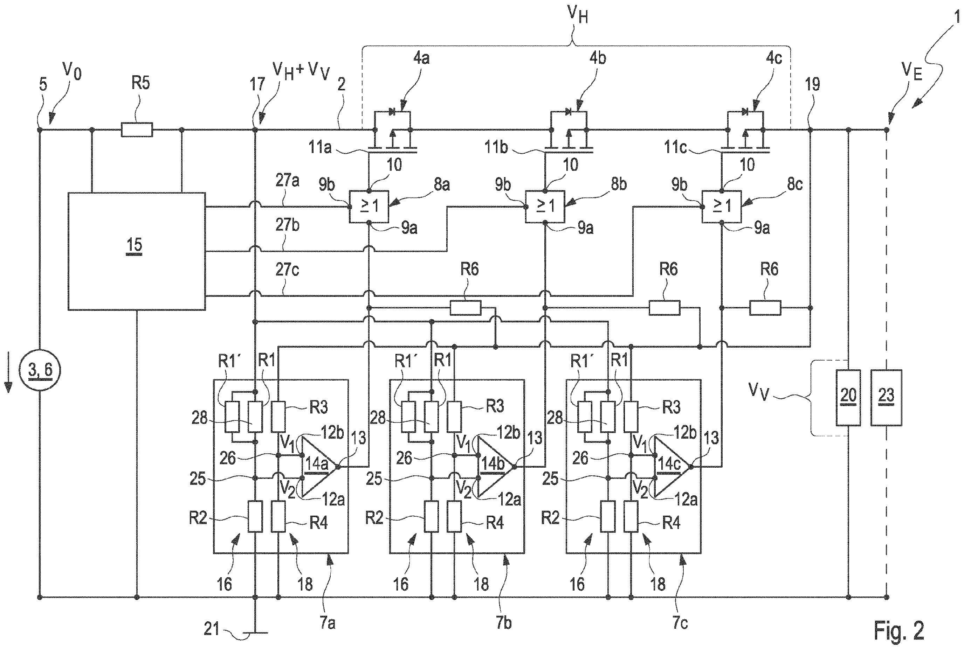

Die Figur 2 zeigt eine Weiterbildung der Schaltungsanordnung 1 der Figur 1. Im Folgenden werden nur die Unterschiede zwischen der Schaltungsanordnung der Figur 1 und jener der Figur 2 erläutert. Im Beispiel der Figur 2 ist parallel zum elektrischen Widerstand R1 ein weiterer ohmscher Widerstand R1' geschaltet. Da der als Temperatursensor 28 ausgebildete Widerstand R1 bei niedrigen Temperaturen sehr hochohmig werden kann, begrenzt der parallel zu R1 geschaltete Widerstand R1' den elektrischen Gesamtwiderstand von R1 und R1' auf einen Maximalen Widerstandswert. Auf diese Weise kann ein Mindest-Spannungsabfall an dem in Reihe zu R1/R1' geschalteten Widerstand R2 sichergestellt werden. Dies wiederum führt zu einer verbesserten Selbsthaltefunktion der betreffenden Komparator-Schaltung 7a, 7b, 7c.

Alternativ oder zusätzlich zum weiterer ohmscher Widerstand R1' kann bei der Schaltungsanordnung 1 gemäß Figur 2 ein weiterer elektrischer Widerstand R6 in Form eines ohmschen Widerstands vorgesehen sein, der den jeweiligen Komparator-Ausgang 13 der Komparator-Schaltung 7a, 7b, 7c elektrisch mit dem zweiten Abzweigpunkt 19 verbindet. Der Widerstand R6 unterbindet einen unerwünschten elektrischen Strom zwischen den beiden Abzweigpunkten 17, 19, der die Selbsthaltefunktion der betreffenden Komparator-Schaltung 7a, 7b, 7c mindern könnte. Auch mittels des elektrischen Widerstands R6 wird also die Selbsthaltefunktion der Komparator-Schaltung 7a, 7b, 7c verbessert. Auf diese Weise kann die Funktionsfähigkeit der drei Komparator-Schaltungen 7a, 7b, 7c unabhängig voneinander sichergestellt werden. Dies gilt insbesondere für einen angenommenen Fehlerfall, bei welchem die beiden Komparator-Eingangsanschlüsse 12a, 12b einer Komparator-Schaltung 7a, 7b, 7c intern niederohmig verbunden wären. Dies hätte zur Folge, dass vom Abzweigpunkt 17 über den elektrischen Widerstand R1, über besagte niederohmige Verbindung und über den elektrischen Widerstand R3 ein elektrischer Strom zum Abzweigpunkt 19 fließt, dort den Spannungspegel anhebt und damit die beiden noch funktionierenden Selbsthalteschaltungen "aushebelt". Damit wären aus Ex-Sicht die drei Schaltungen nicht mehr unabhängig voneinander funktionsfähig, d.h. ein einzelner Fehler könnte alle drei Komparator-Schaltungen 7a, 7b, 7c simultan außer Funktion setzen. Mit dem elektrischen Widerstand R6 als Last ist der jeweilige Open-Drain-Ausgang jeden Komparator-Schaltung 7a, 7b, 7c in der Lage, die elektrische Spannung am Abzweigpunkt 19 bei offenem Halbleiterschalter 4a, 4b, 4c in jedem Fall und unabhängig von dem elektrischen Verbraucher 10) "so weit nach unten zu ziehen", dass die Selbsthaltung der beiden noch funktionierenden Komparator-Einheit 7a, 7b, 7c erhalten bleibt. Der elektrische Widerstand R6 dient also dazu, auch unter Fehlerfallbetrachtungen, wie sie für den Explosionsschutz erforderlich sind, sicherzustellen, dass die drei Komparator-Schaltungen 7a, 7b, 7c immer unabhängig voneinander arbeiten.

Mit der Komparator-Schaltung 7a kann eingangsseitig ein Temperatursensor 28 elektrisch verbunden sein, mittels welchem die Temperatur einer thermisch mit dem Temperatursensor 28 verbundenen Komponente (nicht gezeigt) - dies kann insbesondere eine elektrische/elektronische Komponente - sein. Die Komparator-Schaltung 7a und der Temperatursensor 28 sind derart ausgebildet und aufeinander abgestimmt, dass - wenn die mittels des Temperatursensors 28 ermittelte Temperatur eine vorbestimmte Schwelltemperatur Ts überschreitet - von der Komparator-Schaltung 7a ein am Komparator-Ausgang 13 bereitgestelltes elektrisches Ausgangssignal - in Form einer elektrischen Ausgangsspannung - erzeugt wird, welches ein Umschalten des Halbleiterschalters 4a vom geschlossenen Zustand in den geöffneten Zustand bewirkt, so dass die elektrische Versorgungsleitung 2 unterbrochen wird. Auf diese Weise kann die Komparator-Schaltung 7a auch bei Überhitzung anderer Komponenten (in den Figuren nicht gezeigt), die mittels des Temperatursensors 28 temperaturüberwacht werden, zum Unterbrechen der elektrischen Versorgungsleitung 2 verwendet werden.

Besagter Temperatursensor 28 ist in Figur 1 rein beispielhaft durch den elektrischen Widerstand R1 gebildet, der hierzu als elektrischer NTC-Widerstand ausgebildet und wie in Figur 1 gezeigt elektrisch mit dem ersten Komparator-Eingangsanschluss 12a verbunden ist. Sol ein PTC-Widerstand verwendet werden, so ist im Beispiel der elektrische Widerstand R3 als solcher Temperatursensor 28 auszubilden.

## Patentansprüche

1. Verfahren zum Betreiben einer elektronischen Schaltungsanordnung (1) zur elektrischen Strombegrenzung, insbesondere in einem explosionsgefährdeten Bereich, die zumindest einen elektrischen Verbraucher (20) umfasst, der über eine elektrische Versorgungsleitung (2) mit elektrischer Energie aus einer elektrischen Spannungsquelle (3), vorzugsweise aus einer wiederaufladbaren elektrischen Batterie (6), die eine elektrische Versorgungsspannung (V₀) bereitstellt, versorgt wird;
- gemäß welchem zumindest einer von zumindest zwei in der elektrischen Versorgungsleitung (2) vorhandenen Halbleiterschaltern (4a, 4b, 4c) in einen geöffneten Zustand umgeschaltet wird, so dass die elektrische Versorgungsleitung (2) unterbrochen wird, wenn die an den Halbleiterschaltern (4a, 4b, 4c) in Summe abfallende elektrische Spannung (V_{H}) einen vorgegebenen Spannungs-Schwellwert (V_{S}) überschreitet;
- gemäß welchem der zumindest eine Halbleiterschalter (4a, 4b, 4c) wieder vom geöffneten in den geschlossenen Zustand umgeschaltet wird, wenn an den elektrischen Verbraucher (20) eine externe elektrische Spannung (V_{E}) angelegt wird,
- gemäß welchem die an den wenigstens einen elektrischen Verbraucher (20) angelegte externe elektrische Spannung (V_{E}) größer ist als die von der elektrischen Spannungsquelle (3) bereitgestellte elektrische Versorgungsspannung (V₀).

2. Verfahren nach Anspruch 1,
**dadurch gekennzeichnet, dass**
das Umschalten des wenigstens einen Halbleiterschalters (4a, 4b, 4c) zwischen dem geöffneten und dem geschlossenen Zustand mittels einer mit dem Halbleiterschalter (4a, 4b, 4c) zusammenwirkenden Komparator-Schaltung (7a, 7b, 7c) erfolgt, über welche eine Selbsthaltefunktion umgesetzt wird, so dass der betreffende Halbleiterschalter (4a, 4b, 4c) nach dem Umschalten in den geöffneten Zustand aufgrund der damit einhergehenden elektrischen Unterbrechung der Versorgungsleitung (2) nicht wieder in den geschlossenen Zustand zurückgeschaltet wird.

3. Verfahren nach Anspruch 2,
**dadurch gekennzeichnet, dass**
von der wenigstens einen Komparator-Schaltung (7a, 7b, 7c) erkannt wird, wenn die an den Halbleiterschaltern (4a, 4b, 4c) in Summe abfallende elektrische Spannung (V_{H}) einen vorgegebenen Spannungs-Schwellwert (V_{S}) überschreitet, und, falls dies zutrifft, von der Komparator-Schaltung (7a, 7b, 7c) ein Ausgangssignal erzeugt wird, welches ein Umschalten des wenigstens einen Halbleiterschalters (4a, 4b, 4c) vom geschlossenen Zustand in den geöffneten Zustand bewirkt, so dass die elektrische Versorgungsleitung (2) unterbrochen wird.

4. Verfahren nach einem der Ansprüche 1 bis 3,
**dadurch gekennzeichnet, dass**
mit der Komparator-Schaltung (7a, 7b, 7c) eingangsseitig ein Temperatursensor (28), vorzugsweise ein temperaturabhängiger elektrischer Widerstand, höchst vorzugsweise ein elektrischer NTC-Widerstand, elektrisch verbunden ist, so dass - wenn die mittels des Temperatursensors (28) ermittelte Temperatur eine vorbestimmte Schwelltemperatur (Ts) überschreitet - von der Komparator-Schaltung (7a, 7b, 7c) ein Ausgangssignal erzeugt wird, welches ein Umschalten des wenigstens einen Halbleiterschalters (4a, 4b, 4c) vom geschlossenen Zustand in den geöffneten Zustand bewirkt, so dass die elektrische Versorgungsleitung (2) unterbrochen wird.

5. Verfahren nach einem der vorhergehenden Ansprüche,
**dadurch gekennzeichnet, dass**
von der Komparator-Schaltung (7a, 7b, 7c) erkannt wird, ob an den wenigstens einen elektrischen Verbraucher (20) die externe elektrische Spannung (V₀) angelegt ist und, falls dies zutrifft, von der Komparator-Schaltung (7a, 7b, 7c) ein Ausgangssignal erzeugt wird, welches ein Umschalten des Halbleiterschalters (4a, 4b, 4c) vom geöffneten Zustand in den geschlossenen Zustand bewirkt.

6. Verfahren nach einem der vorhergehenden Ansprüche,
**dadurch gekennzeichnet, dass**
die externe elektrische Spannung (V_{E}) durch Anschließen eines elektrischen Ladegeräts (23) an den wenigstens einen elektrischen Verbraucher (20), insbesondere elektrisch parallel zu diesem geschaltet, elektrisch angelegt bzw. bereitgestellt wird.

7. Verfahren nach einem der vorhergehenden Ansprüche,
**dadurch gekennzeichnet, dass**
das Umschalten des zumindest einen Halbleiterschalters (4a, 4b, 4c) zwischen dem geöffneten und dem geschlossenen Zustand mittels einer Logikeinheit (8a, 8b, 8c) erfolgt, die durch eine "Oder-Verknüpfung" " oder durch eine "Und-Verknüpfung" zweier Signaleingänge ein Ausgangssignal erzeugt, mittels welchem der Halbleiterschalters (4a, 4b, 4c) angesteuert wird, wobei ein an einem ersten Signaleingang (9a) der zumindest einen Logik-Einheit (8a, 8b, 8c) erzeugtes erstes Eingangssignal von der Komparator-Schaltung (7a, 7b, 7c) erzeugt wird.

8. Elektronische Schaltungsanordnung (1) zur elektrischen Strombegrenzung in einem explosionsgefährdeten Bereich,
- mit wenigstens einem elektrischen Verbraucher (20), welcher mittels einer elektrischen Versorgungsleitung (2) mit elektrischer Energie aus einer elektrischen Spannungsquelle (3), vorzugsweise einer wiederaufladbaren Batterie (6), versorgbar ist;
- mit einem ersten Halbleiterschalter (4a) und mit zumindest einem zweiten Halbleiterschalter (4b, 4c), welche derart in der elektrischen Versorgungsleitung (2) angeordnet sind, dass durch Umschalten wenigstens eines Halbleiterschalters (4a, 4b, 4c) in einen geöffneten Zustand die elektrische Versorgungsleitung (2) elektrisch unterbrochen wird, so dass über die elektrische Versorgungsleitung (2) keine elektrische Energie von der elektrischen Spannungsquelle (3) zum wenigstens einem elektrischen Verbraucher (20) transportiert werden kann;
- mit einem elektrischen Versorgungsanschluss (5), an welchen die elektrische Spannungsquelle (3), insbesondere zur Durchführung des Verfahrens nach einem der vorhergehenden Ansprüche, anschließbar ist oder angeschlossen ist, wobei die wenigstens zwei Halbleiterschalter (4a, 4b, 4c) zwischen dem elektrischen Versorgungsanschluss (5) und dem elektrischen Verbraucher (20) angeordnet sind;
- mit zumindest einer Komparator-Schaltung (7a, 7b, 7c), welche derart ausgebildet ist, dass sie:
- zumindest einen Halbleiterschalter (4a, 4b, 4c) in einen geöffneten Zustand umschaltet, so dass die elektrische Versorgungsleitung (2) unterbrochen ist, wenn die an den Halbleiterschaltern (4a, 4b, 4c) in Summe abfallende elektrische Spannung (V) einen vorgegebenen Spannungs-Schwellwert (V_{S}) überschreitet; **dadurch gekennzeichnet, dass**
- den zumindest einen Halbleiterschalter (4a, 4b, 4c) wieder vom geöffneten in den geschlossenen Zustand umschaltet, wenn an den elektrischen Verbraucher (20) eine externe elektrische Spannung (V_{E}) angelegt wird,
- wobei zum Umschalten vom geöffneten in den geschlossenen Zustand die an den wenigstens einen elektrischen Verbraucher (20) angelegte elektrische Spannung (V_{E}) größer sein muss als die von der elektrischen Spannungsquelle (3) bereitgestellte elektrische Versorgungsspannung (V₀).

9. Elektronische Schaltungsanordnung nach Anspruch 8,
**dadurch gekennzeichnet, dass**
das Umschalten des zumindest einen Halbleiterschalters (4a, 4b, 4c) zwischen dem geöffneten und dem geschlossenen Zustand mittels einer Logikeinheit (8a, 8b, 8c) erfolgt, die durch eine "Oder-Verknüpfung" oder durch eine "Und-Verknüpfung" mindestens zweier Signaleingänge (9a, 9b) ein Ausgangssignal (10) erzeugt, mittels welchem der Halbleiterschalters angesteuert wird, wobei zum Erzeugen des ersten elektrischen Eingangssignals der erste Signaleingang (9a) der Logikeinheit (8a, 8b, 8c) elektrisch mit einem Komparator-Ausgang (13) der dieser Logikeinheit (8a, 8b, 8c) zugeordneten Komparator-Schaltung (7a, 7b, 7c) verbunden ist.

10. Elektronische Schaltungsanordnung nach Anspruch 8 oder 9,
**dadurch gekennzeichnet, dass**
in der elektrischen Versorgungsleitung (2) eine zusätzliche elektrische Spannungsüberwachung (15) angeordnet ist, welche derart ausgebildet ist, dass sie zumindest einen der zumindest zwei Halbleiterschalter (4a, 4b, 4c) in den geöffneten Zustand umschaltet, wenn der durch die elektrische Versorgungsleitung (2) fließende elektrische Strom (I) einen vorbestimmten Strom-Schwellwert (I_{S}) überschreitet,

11. Elektronische Schaltungsanordnung nach Anspruch 10,
**dadurch gekennzeichnet, dass**
die elektrische Spannungsüberwachung (15) zum Umschalten des Halbleiterschalters (4a, 4b, 4c) in den geöffneten Zustand bei Überschreiten des Strom-Schwellwerts (I_{S}) am zweiten Signaleingang (9b) der Logikeinheit (8a, 8b, 8c) und zum Erzeugen des zweiten Eingangssignals elektrisch mit dem zweiten Signaleingang (9b) der Logikeinheit (8a, 8b, 8c) verbunden ist.

12. Elektronische Schaltungsanordnung nach einem der Ansprüche 11 bis 11, **dadurch gekennzeichnet, dass**
- zumindest eine Komparator-Schaltung (7a, 7b, 7c), vorzugsweise alle Komparator-Schaltungen (7a, 7b, 7c), einen Komparator-Ausgangsanschluss (13) sowie einen ersten und einen zweiten Komparator-Eingangsanschluss (12a, 12b) aufweist; und dass
- im Betrieb der Komparator-Schaltung (7a, 7b, 7c) in Abhängigkeit eines Vergleichs zwischen dem am ersten und zweiten Komparator-Eingangsanschluss (12a, 12b) anliegenden ersten bzw. zweiten Komparator-Eingangssignal am Komparator-Ausgangsanschluss (13) ein Komparator-Ausgangssignal erzeugt wird.

13. Elektronische Schaltungsanordnung nach einem der Ansprüche 8 bis 12, **dadurch gekennzeichnet, dass**
mit der wenigstens einen Komparator-Schaltung (7a, 7b, 7c) eingangsseitig, vorzugsweise mit dem ersten oder zweiten Komparator-Eingangsanschluss (12a, 12b), ein Temperatursensor (28), vorzugsweise ein temperaturabhängiger elektrischer Widerstand, höchst vorzugsweise ein elektrischer NTC-Widerstand, elektrisch verbunden ist, so dass von der Komparator-Schaltung (7a, 7b, 7c) ein elektrisches Ausgangssignal erzeugt wird, welches ein Umschalten des wenigstens einen Halbleiterschalters (4a, 4b, 4c) vom geschlossenen Zustand in den geöffneten Zustand bewirkt, so dass die elektrische Versorgungsleitung (2) unterbrochen wird, wenn die mittels des Temperatursensors (28) gemessene Temperatur einen vorbestimmten Temperatur-Schwellwert (Ts) überschritten hat.

14. Elektronische Schaltungsanordnung nach einem der Ansprüche 8 bis 13, **dadurch gekennzeichnet, dass**
in der elektronischen Schaltungsanordnung (1) für jeden zum Unterbrechen der elektrischen Versorgungsleitung in dieser vorgesehenen Halbleiterschalter (4a, 4b, 4c) jeweils eine Logikeinheit (8a, 8b, 8c) zum Steuern dieses Halbleiterschalters (4a, 4b, 4c) und eine Komparator-Schaltung (7a, 7b, 7c) zum Steuern der jeweiligen Logikeinheit (8a, 8b, 8c) vorhanden ist.

15. Elektronische Schaltungsanordnung nach einem der Ansprüche 8 bis 14, **dadurch gekennzeichnet, dass**
im Betrieb der Schaltungsanordnung von der Komparator-Schaltung (7a, 7b, 7c) erkannt wird, ob an den wenigstens einen elektrischen Verbraucher (20) die externe elektrische Spannung (V₀) angelegt ist und, falls dies zutrifft, von der Komparator-Schaltung (7a, 7b, 7c) ein Ausgangssignal erzeugt wird, welches ein Umschalten des Halbleiterschalters (4a, 4b, 4c) vom geöffneten Zustand in den geschlossenen Zustand bewirkt.

## Claims

1. Method for operating an electronic circuit arrangement (1) for electrical current limiting, in particular in a potentially explosive area, which comprises at least one electrical consumer (20), which is supplied via an electrical supply line (2) with electrical energy from an electrical voltage source (3), preferably from a rechargeable electrical battery (6) which provides an electrical supply voltage (V₀);
- according to which at least one of at least two semiconductor switches (4a, 4b, 4c) present in the electrical supply line (2) is switched into an open state, such that the electrical supply line (2) is interrupted, when the electrical voltage (V_{H}) decreasing as a whole at the semiconductor switches (4a, 4b, 4c) exceeds a predetermined voltage threshold value (V_{S});
- according to which the at least one semiconductor switch (4a, 4b, 4c) is switched back from the open into the closed state, when an external electrical voltage (V_{E}) is applied to the electrical consumer (20).
- according to which the external electrical voltage (V_{E}) applied to the at least one electrical consumer (20) is greater than the electrical supply voltage (V₀) provided by the electrical voltage source (3).

2. Method according to claim 1,
**characterized in that**
the switching of the at least one semiconductor switch (4a, 4b, 4c) between the open and the closed state is carried out by means of a comparator circuit (7a, 7b, 7c) interacting with the semiconductor switch (4a, 4b, 4c), by means of which a self-holding function is implemented, such that the semiconductor switch (4a, 4b, 4c) concerned, after the switching into the open state, for reasons of the electrical interruption of the supply line (2) which this causes, is not switched back into the closed state.

3. Method according to claim 2,
**characterized in that**
the at least one comparator circuit (7a, 7b, 7c) recognizes when the electrical voltage (V_{H}) decreasing as a whole at the semiconductor switches (4a, 4b, 4c) exceeds a predetermined voltage threshold value (V_{S}), and, should this be the case, an output signal is generated by the comparator circuit (7a, 7b, 7c) which effects a switching of the at least one semiconductor switch (4a, 4b, 4c) from the closed state into the open state, such that the electrical supply line (2) is interrupted.

4. Method according to any one of claims 1 to 3,
**characterized in that**
a temperature sensor (28), preferably a temperature-dependent electrical resistance, most preferably an electrical NTC resistance, is connected electrically with the comparator circuit (7a, 7b, 7c) on the input side such that, if the temperature determined by means of the temperature sensor (28) exceeds a prespecified threshold temperature (Tₛ), an output signal is generated by the comparator circuit (7a, 7b, 7c) which effects a switching of the at least one semiconductor switch (4a, 4b, 4c) from the closed state into the open state, such that the electrical supply line (2) is interrupted.

5. Method according to any of the preceding claims
**characterized in that**
it is recognized by the comparator circuit (7a, 7b, 7c) whether the external electrical voltage (V₀) is applied to the at least one electrical consumer (20), and, should this be the case, an output signal is generated by the comparator circuit (7a, 7b, 7c) which effects a switching of the semiconductor switch (4a, 4b, 4c) from the open state into the closed state.

6. Method according to any of the preceding claims
**characterized in that**
the external electrical voltage (V_{E}) is electrically applied or provided by connecting an electrical charging device (23) to the at least one electrical consumer (20), in particular connecting electrically in parallel thereto.

7. Method according to any of the preceding claims
**characterized in that**
the switching of the at least one semiconductor switch (4a, 4b, 4c) between the open and the closed state is carried out by means of a logic unit (8a, 8b, 8c) which by means of an "OR connection" or by means of an "AND connection" of two signal inputs generates an output signal by means of which the semiconductor switch (4a, 4b, 4c) is controlled, wherein a first input signal generated at a first signal input (9a) of the at least one logic unit (8a, 8b, 8c) is generated by the comparator circuit (7a, 7b, 7c).

8. Electronic circuit arrangement (1) for electrical current limiting in a potentially explosive area,
- comprising at least one electrical consumer (20), which is supplied via an electrical supply line (2) with electrical energy from an electrical voltage source (3), preferably from a rechargeable electrical battery (6);
- comprising a first semiconductor switch (4a) and comprising at least one second semiconductor switch (4b, 4c) which are arranged in the electrical supply line (2) such that by means of switching at least one semiconductor switch (4a, 4b, 4c) into an open state the electrical supply line (2) is electrically interrupted, such that no electrical energy can be transported via the electrical supply line (2) from the electrical voltage source (3) to the at least one electrical consumer (20);
- comprising an electrical supply terminal (5) to which the electrical voltage source (3) can be connected or is connected, in particular for carrying out the method according to any of the preceding claims, wherein the at least two semiconductor switches (4a, 4b, 4c) are arranged between the electrical supply terminal (5) and the electrical consumer (20);
- comprising at least one comparator circuit (7a, 7b, 7c), which is configured such that it:
- switches at least one semiconductor switch (4a, 4b, 4c into an open state, such that the electrical supply line (2) is interrupted when the electrical voltage (V) decreasing as a whole at the semiconductor switches (4a, 4b, 4c) exceeds a predetermined voltage threshold value (Vs); **characterised in that**
- the at least one semiconductor switch (4a, 4b, 4c) switches back from the open into the closed state when an external electrical voltage (V_{E}) is applied to the electrical consumer (20),
- wherein for switching from the open into the closed state, the electrical voltage (V_{E}) applied to the at least one electrical consumer (20) must be greater than the electrical supply voltage (V₀) provided by the electrical voltage source (3).

9. Electronic circuit arrangement according to claim 8,
**characterized in that**
the switching of the at least one semiconductor switch (4a, 4b, 4c) between the open and the closed state is carried out by means of a logic unit (8a, 8b, 8c) which by means of an "OR connection" or by means of an "AND connection" of two signal inputs (9a, 9b) generates an output signal (10) by means of which the semiconductor switch is controlled, wherein for generating the first electrical input signal, the first signal input (9a) of the logic unit (8a, 8b, 8c) is connected electrically to a comparator output (13) of the comparator circuit (7a, 7b, 7c) assigned to this logic unit (8a, 8b, 8c).

10. Electronic circuit arrangement according to claim 8 or 9,
**characterized in that**
in the electrical supply line (2) is arranged an additional electrical voltage monitoring (15), which is configured such that it switches at least one of the at least two semiconductor switches (4a, 4b, 4c) into the open state, when the electrical current (I) flowing through the electrical supply line (2) exceeds a predetermined current threshold value (Iₛ).

11. Electronic circuit arrangement according to claim 10,
**characterized in that**
the electrical voltage monitoring (15) is connected electrically to the second signal input (9b) of the logic unit (8a, 8b, 8c) for switching the semiconductor switch (4a, 4b, 4c) into the open state when the current threshold value (Iₛ) at the second signal input (9b) of the logic unit (8a, 8b, 8c) is exceeded and for generating the second input signal.

12. Electronic circuit arrangement according to any of claims 11 to 11,
**characterized in that**
- at least one comparator circuit (7a, 7b, 7c), preferably all comparator circuits (7a, 7b, 7c), has a comparator output terminal (13) and a first and a second comparator input terminal (12a, 12b); and that
- during operation of the comparator circuit (7a, 7b, 7c) as a function of a comparison between the first or second comparator input signal applied at the first and second comparator
input terminal (12a, 12b), a comparator output signal is generated at the comparator output terminal (13).

13. Electronic circuit arrangement according to any of claims 8 to 12,
**characterized in that**
to the at least one comparator circuit (7a, 7b, 7c) on the input side, preferably with the first or second comparator input terminal (12a, 12b), is connected a temperature sensor (28), preferably a temperature-dependent electrical resistance, most preferably an electrical NTC resistance, such that an electrical output signal is generated by the comparator circuit (7a, 7b, 7c) which effects a switching of the at least one semiconductor switch (4a, 4b, 4c) from the closed state into the open state, such that the electrical supply line (2) is interrupted when the temperature measured by means of the temperature sensor (28) has exceeded a predetermined temperature threshold value (Tₛ).

14. Electronic circuit arrangement according to any of claims 8 to 13,
**characterized in that**
in the electronic circuit arrangement (1), for each semiconductor switch (4a, 4b, 4c) provided for interrupting the electrical supply line therein, in each case one logic unit (8a, 8b, 8c) is present for controlling this semiconductor switch (4a, 4b, 4c) and a comparator circuit (7a, 7b, 7c) is present for controlling the respective logic unit (8a, 8b, 8c).

15. Electronic circuit arrangement according to any of claims 8 to 14,
**characterized in that**
during operation of the circuit arrangement, it is recognised by the comparator circuit (7a, 7b, 7c) whether the external electrical voltage (Va) is applied to the at least one electrical consumer (20), and, if this is the case, an output signal is generated by the comparator circuit (7a, 7b, 7c) which effects a switching of the semiconductor switch (4a, 4b, 4c) from the open state into the closed state.

## Revendications

1. Procédé de fonctionnement d'un dispositif de circuit électronique (1) pour la limitation de courant électrique, en particulier dans une zone explosible, qui comprend au moins un consommateur électrique (20) qui est alimenté en énergie électrique par une ligne d'alimentation électrique (2) à partir d'une source de tension électrique (3), de préférence à partir d'une batterie électrique rechargeable (6) qui fournit une tension d'alimentation électrique (Va) ;
- selon lequel au moins un d'au moins deux commutateurs à semi-conducteurs (4a, 4b, 4c) présents dans la ligne d'alimentation électrique (2) est commuté dans un état ouvert, de sorte que la ligne d'alimentation électrique (2) est interrompue lorsque la tension électrique (V_{H}) chutant au total sur les commutateurs à semi-conducteurs (4a, 4b, 4c) dépasse une valeur seuil de tension (V_{S}) prédéterminée ;
- selon lequel l'au moins un commutateur à semi-conducteurs (4a, 4b, 4c) est à nouveau commuté de l'état ouvert à l'état fermé lorsqu'une tension électrique externe (V_{E}) est appliquée au consommateur électrique (20),
- selon lequel la tension électrique externe (V_{E}) appliquée à l'au moins un consommateur électrique (20) est supérieure à la tension d'alimentation électrique (V₀) fournie par la source de tension électrique (3).

2. Procédé selon la revendication 1,
**caractérisé en ce que**
la commutation d'au moins un commutateur à semi-conducteurs (4a, 4b, 4c) entre l'état ouvert et l'état fermé s'effectue au moyen d'un circuit comparateur (7a, 7b, 7c) coopérant avec le commutateur à semi-conducteurs (4a, 4b, 4c), par l'intermédiaire duquel une fonction d'auto-entretien est mise en oeuvre, de sorte que le commutateur à semi-conducteurs (4a, 4b, 4c) concerné n'est pas ramené à l'état fermé après la commutation à l'état ouvert en raison de l'interruption électrique de la ligne d'alimentation (2) en résultant.

3. Procédé selon la revendication 2,
**caractérisé en ce que**
l'au moins un circuit comparateur (7a, 7b, 7c) détecte si la tension électrique (V_{H}) chutant au total sur les commutateurs à semi-conducteurs (4a, 4b, 4c) dépasse une valeur seuil de tension (V_{S}) prédéterminée et, si tel est le cas, le circuit comparateur (7a, 7b, 7c) génère un signal de sortie, lequel provoque une commutation de l'au moins un commutateur à semi-conducteurs (4a, 4b, 4c) de l'état fermé à l'état ouvert, de sorte que la ligne d'alimentation électrique (2) est interrompue.

4. Procédé selon l'une quelconque des revendications 1 à 3,
**caractérisé en ce que**
un capteur de température (28), de préférence une résistance électrique dépendant de la température, de préférence une résistance électrique NTC, est connecté électriquement au circuit comparateur (7a, 7b, 7c) côté entrée, de sorte que, lorsque la température déterminée au moyen du capteur de température (28) dépasse une température seuil (Tₛ) prédéterminée, le circuit comparateur (7a, 7b, 7c) génère un signal de sortie, lequel provoque une commutation de l'au moins un commutateur à semi-conducteurs (4a, 4b, 4c) de l'état fermé à l'état ouvert, de sorte que la ligne d'alimentation électrique (2) est interrompue.

5. Procédé selon l'une quelconque des revendications précédentes,
**caractérisé en ce que**
le circuit comparateur (7a, 7b, 7c) détecte si la tension électrique externe (Va) est appliquée à l'au moins un consommateur électrique (20) et, si tel est le cas, le circuit comparateur (7a, 7b, 7c) génère un signal de sortie, lequel provoque une commutation du commutateur à semi-conducteurs (4a, 4b, 4c) de l'état ouvert à l'état fermé.

6. Procédé selon l'une quelconque des revendications précédentes,
**caractérisé en ce que**
la tension électrique externe (V_{E}) est appliquée ou fournie électriquement par l'intermédiaire du branchement d'un chargeur électrique (23) à l'au moins un consommateur électrique (20), en particulier connecté électriquement en parallèle à celui-ci.

7. Procédé selon l'une quelconque des revendications précédentes,
**caractérisé en ce que**
la commutation de l'au moins un commutateur à semi-conducteurs (4a, 4b, 4c) entre l'état ouvert et l'état fermé s'effectue au moyen d'une unité logique (8a, 8b, 8c) qui génère un signal de sortie par l'intermédiaire d'un « connecteur OU » ou d'un « connecteur ET » de deux entrées de signal, au moyen duquel le commutateur à semi-conducteurs (4a, 4b, 4c) est commandé, dans lequel un premier signal d'entrée généré à une première entrée de signal (9a) de l'au moins une unité logique (8a, 8b, 8c) est généré par le circuit comparateur (7a, 7b, 7c).

8. Dispositif de circuit électronique (1) pour la limitation de courant électrique dans une zone explosible,
- avec au moins un consommateur électrique (20), lequel peut être alimenté en énergie électrique au moyen d'une ligne d'alimentation électrique (2) à partir d'une source de tension électrique (3), de préférence une batterie rechargeable (6) ;
- avec un premier commutateur à semi-conducteurs (4a) et avec au moins un second commutateur à semi-conducteurs (4b, 4c), lesquels sont disposés dans la ligne d'alimentation électrique (2) de sorte que, par l'intermédiaire de la commutation d'au moins un commutateur à semi-conducteurs (4a, 4b, 4c) dans un état ouvert, la ligne d'alimentation électrique (2) est interrompue électriquement, de sorte qu'aucune énergie électrique ne peut être transportée par la ligne d'alimentation électrique (2) de la source de tension électrique (3) à l'au moins un consommateur électrique (20) ;
- avec un raccord d'alimentation électrique (5) auquel la source de tension électrique (3) peut être raccordée ou est raccordée, en particulier pour la mise en oeuvre du procédé selon l'une quelconque des revendications précédentes, dans lequel les au moins deux commutateurs à semi-conducteurs (4a, 4b, 4c) sont disposés entre le raccord d'alimentation électrique (5) et le consommateur électrique (20) ;
- avec au moins un circuit comparateur (7a, 7b, 7c), lequel est conçu de sorte qu'il :
- commute au moins un commutateur à semi-conducteurs (4a, 4b, 4c) dans un état ouvert, de sorte que la ligne d'alimentation électrique (2) est interrompue lorsque la tension électrique (V) chutant au total sur les commutateurs à semi-conducteurs (4a, 4b, 4c) dépasse une valeur seuil de tension (V_{S}) prédéterminée ; **caractérisé en ce que**
- l'au moins un commutateur à semi-conducteurs (4a, 4b, 4c) est à nouveau commuté de l'état ouvert à l'état fermé lorsqu'une tension électrique externe (V_{E}) est appliquée au consommateur électrique (20),
- dans lequel, pour commuter de l'état ouvert à l'état fermé, la tension électrique (V_{E}) appliquée à l'au moins un consommateur électrique (20) doit être supérieure à la tension d'alimentation électrique (V₀) fournie par la source de tension électrique (3).

9. Dispositif de circuit électronique selon la revendication 8,
**caractérisé en ce que**
la commutation de l'au moins un commutateur à semi-conducteurs (4a, 4b, 4c) entre l'état ouvert et l'état fermé s'effectue au moyen d'une unité logique (8a, 8b, 8c) qui génère un signal de sortie (10) par l'intermédiaire d'un « connecteur OU » ou d'un « connecteur ET » d'au moins deux entrées de signal (9a, 9b), au moyen duquel le commutateur à semi-conducteurs est commandé, dans lequel la première entrée de signal (9a) de l'unité logique (8a, 8b, 8c) est connectée électriquement à une sortie de comparateur (13) du circuit comparateur (7a, 7b, 7c) associé à cette unité logique (8a, 8b, 8c) pour la génération du premier signal d'entrée électrique.

10. Dispositif de circuit électronique selon la revendication 8 ou 9,
**caractérisé en ce que**
une surveillance de tension électrique supplémentaire (15) est disposée dans la ligne d'alimentation électrique (2), laquelle est conçue de sorte qu'elle commute au moins un des au moins deux commutateurs à semi-conducteurs (4a, 4b, 4c) à l'état ouvert lorsque le courant électrique (I) circulant à travers la ligne d'alimentation électrique (2) dépasse une valeur seuil de courant prédéterminée (Iₛ),

11. Dispositif de circuit électronique selon la revendication 10,
**caractérisé en ce que**
la surveillance de tension électrique (15) est connectée électriquement à la seconde entrée de signal (9b) de l'unité logique (8a, 8b, 8c) pour la commutation de l'interrupteur à semi-conducteurs (4a, 4b, 4c) à l'état ouvert en cas de dépassement de la valeur seuil de courant (Iₛ) et pour la génération du second signal d'entrée (9b) de l'unité logique (8a, 8b, 8c).

12. Dispositif de circuit électronique selon l'une quelconque des revendications 11 à 11,
**caractérisé en ce que**
- au moins un circuit comparateur (7a, 7b, 7c), de préférence tous les circuits comparateurs (7a, 7b, 7c), présente une borne de sortie de comparateur (13) ainsi qu'une première et une seconde borne d'entrée de comparateur (12a, 12b) ; et que
- lors du fonctionnement du circuit comparateur (7a, 7b, 7c), un signal de sortie de comparateur est généré
à la borne de sortie de comparateur (13) en fonction d'une comparaison entre le premier ou le second signal d'entrée de comparateur appliqué à la première et à la seconde borne d'entrée de comparateur (12a, 12b).

13. Dispositif de circuit électronique selon l'une quelconque des revendications 8 à 12,
**caractérisé en ce que**
un capteur de température (28), de préférence une résistance électrique dépendant de la température, de préférence une résistance NTC électrique, est connecté électriquement à l'au moins un circuit comparateur (7a, 7b, 7c) côté entrée, de préférence à la première ou à la seconde borne d'entrée de comparateur (12a, 12b), de sorte qu'un signal de sortie électrique est généré par le circuit comparateur (7a, 7b, 7c), lequel provoque une commutation de l'au moins un commutateur à semi-conducteurs (4a, 4b, 4c) de l'état fermé à l'état ouvert, de sorte que la ligne d'alimentation électrique (2) est interrompue lorsque la température mesurée au moyen du capteur de température (28) a dépassé une valeur seuil de température (Tₛ) prédéterminée.

14. Dispositif de circuit électronique selon l'une quelconque des revendications 8 à 13,
**caractérisé en ce que**
dans le dispositif de circuit électronique (1), pour chaque commutateur à semi-conducteurs (4a, 4b, 4c) prévu pour l'interruption de la ligne d'alimentation électrique dans celui-ci, respectivement une unité logique (8a, 8b, 8c) est présente pour la commande de ce commutateur à semi-conducteurs (4a, 4b, 4c) et un circuit comparateur (7a, 7b, 7c) pour la commande de l'unité logique (8a, 8b, 8c) respective.

15. Dispositif de circuit électronique selon l'une quelconque des revendications 8 à 14,
**caractérisé en ce que**
lors du fonctionnement du dispositif de circuit, le circuit comparateur (7a, 7b, 7c) détecte si la tension électrique externe (V₀) est appliquée à l'au moins un consommateur électrique (20) et, si tel est le cas, le circuit comparateur (7a, 7b, 7c) génère un signal de sortie, lequel provoque une commutation du commutateur à semi-conducteurs (4a, 4b, 4c) de l'état ouvert à l'état fermé.
